(19) Europäisches Patentamt
European Patent Office
Office européen des brevets

(11) EP 3 708 995 A1

(12) **EUROPEAN PATENT APPLICATION**
published in accordance with Art. 153(4) EPC

(43) Date of publication:
**16.09.2020 Bulletin 2020/38**

(21) Application number: **18876153.0**

(22) Date of filing: **10.10.2018**

(51) Int Cl.:
***G01M 17/02*** (2006.01) ***B60C 19/00*** (2006.01)
***G01L 5/00*** (2006.01) ***G01N 19/02*** (2006.01)

(86) International application number:
**PCT/JP2018/037823**

(87) International publication number:
**WO 2019/093055 (16.05.2019 Gazette 2019/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.11.2017 JP 2017214457**

(71) Applicant: **Kabushiki Kaisha Kobe Seiko Sho (Kobe Steel, Ltd.)**
**Kobe-shi, Hyogo 651-8585 (JP)**

(72) Inventor: **OKADA, Toru**
**Kobe-shi, Hyogo 651-2271 (JP)**

(74) Representative: **TBK**
**Bavariaring 4-6**
**80336 München (DE)**

# (54) TIRE TANGENTIAL DIRECTION LOAD MEASURING DEVICE, AND TIRE ROLLING RESISTANCE EVALUATING DEVICE

(57) Provided are a tire tangential load measuring device capable of directly measuring a tangential load of a tire and a tire rolling resistance evaluating device capable of evaluating a rolling resistance of a tire using the tire tangential load measuring device, without using a large-sized device. A tire tangential load measuring device (10) includes two or more load rolls (44A, 44B) smaller in diameter than that of the tire and arranged side by side, an air cylinder (13) as a moving mechanism capable of pressing the two or more load rolls (44A, 44B) against the rotating tire with a predetermined load fz, and a strain gauge (51) as a tangential load sensor for measuring the tangential load fx of the tire in a rotating state while the surfaces of the two or more load rolls (44A, 44B) are pressed against the tread surface of the tire with the predetermined load fz. The tire rolling resistance evaluating device uses the tangential load measuring device (10).

*FIG.7*

10
38
52a
42
30
32
51
34
43
35
13
15 14 16
44B
11
41
12
43
31
51
27
29 28
29
38
52a
42
26
VERTICAL DIRECTION
HORIZONTAL DIRECTION

EP 3 708 995 A1

## Description

### TECHNICAL FIELD

The present disclosure relates to a tire tangential load measuring device and a tire rolling resistance evaluating device using the tire tangential load measuring device.

### BACKGROUND ART

An important measurement item in measuring the properties and performance of tires for trucks, passenger cars, and other vehicles is a rolling resistance of the tire.

The rolling resistance of the tire is a tangential force generated between the tire and the ground when the tire is transferred on the ground. In a tire testing machine, the rolling resistance of a tire is measured as a tangential force generated between a test tire and a mating surface (for example, a surface of a load drum) with which the tire comes into contact and rotates. In other words, when a certain amount of radial force (load Fz) is applied between the tire and the mating surface, a rolling resistance Fx corresponding to a load Fz of the tire is generated and a relationship between the load Fz and the rolling resistance Fx is measured.

Such a method of measuring the rolling resistance is specified by JIS D 4234 (Tire rolling resistance test method for passenger cars, trucks, and buses, 2009) as a method using a drum type tire running tester.

As a rolling resistance tester of the JIS (Japan Industrial Standards), for example, the one described in Patent Document 1 is known. The rolling resistance measuring device of Patent Document 1 is configured such that the tire is pressed into contact with an outer peripheral surface of a cylindrical load drum (traveling drum) and the force and torque (moment) applied in x, y, and z-axis directions are measured by a multiple component force detector of a spindle which supports the tire via a bearing. The device of Patent Document 1 is configured to correct the interference between those component forces and then measure the relationship between the load Fz in a radial direction of the tire and the rolling resistance Fx.

### CITATION LIST

### PATENT DOCUMENT

[Patent Document 1]: JP-A-2003-4598

### SUMMARY OF THE INVENTION

### PROBLEMS THAT THE INVENTION IS TO SOLVE

However, in the rolling resistance measuring device of Patent Document 1, it is necessary to adopt a load drum (traveling drum) specified in JIS D 4234. That is, since a diameter of the load drum (traveling drum) must be set to 1.7 m or more, there is a problem that the rolling resistance measuring device necessarily becomes large.

Also, in the rolling resistance measuring device of Patent Document 1, to obtain the rolling resistance Fx corresponding to the load Fz of the tire, as a prerequisite, it is necessary to measure at least the force (that is, equivalent to the tangential load fx of the tire) applied in the x-axis direction of the tire with a multiple component force detector provided on a spindle supporting the tire.

Therefore, when measuring the tangential load fx of the tire, there is naturally a problem that the large-sized device described above must be used.

An object of the disclosure is to provide a tire tangential load measuring device capable of directly measuring a tangential load of a tire and a tire rolling resistance evaluating device capable of evaluating a rolling resistance of a tire using the tire tangential load measuring device, without using a large-sized device.

### MEANS FOR SOLVING THE PROBLEMS

To achieve the object, a tire tangential load measuring device of the disclosure includes one load roll which has a surface simulating a road surface on which a tire runs and has a smaller diameter than that of the tire, a moving mechanism capable of pressing the surface of the one load roll against a tread surface of the rotating tire with a predetermined load fz, and a tangential load sensor for measuring a tangential load fx of the tire in a rotating state while the surface of the one load roll is pressed against the tread surface of the tire with the predetermined load fz.

According to the disclosure, since the load roll having a smaller diameter than that of the tire is used, the device for directly measuring the tangential load fx of the tire can be reduced in size.

Another tire tangential load measuring device of the disclosure includes two or more load rolls which have surfaces simulating a road surface on which a tire runs, have smaller diameters than that of the tire, and are arranged side by side, a moving mechanism capable of pressing the surfaces of the two or more load rolls against a tread surface of the rotating tire with a predetermined load fz, and a tangential load sensor for measuring a tangential load fx of the tire in a rotating state while the surfaces of the two or more load rolls are pressed against the tread surface of the tire with the predetermined load fz.

According to the disclosure, since the load rolls having a smaller diameter than that of the tire is used, the device for directly measuring the tangential load fx of the tire can be reduced in size. In addition, by arranging two or more load rolls side by side, it is possible to measure the tangential load fx of the tire by bringing the tire closer to an actual ground contact state (that is, reducing a curvature at the time of deformation of the tire).

It is preferable that a distance L between rotation centers of the adjacent load rolls of the two or more load rolls be set in a range represented by the following expression (1).

$$0.5 \times fz / (B \times P) \leq L \leq 1.5 \times fz / (B \times P) \quad (1)$$

Here, fz is a predetermined load (kN), B is a width (m) of the tire, and P is a standard tire pressure (kPa).

The distance L between the rotation centers of the adjacent load rolls of the two or more load rolls is set in the range represented by the above expression (1), and thus the deformation of the tire can be brought into a deformed state close to when the tire is installed on an actual flat road surface. That is, when actually measuring tires of a plurality of sizes, the width of the tire and the length of the width of the ground contact surface are not necessarily equal (the width of the ground contact surface is smaller than the width of the actual tire). However, the distance L between the rotation centers of the adjacent load rolls of the two or more load rolls is set in the range represented by the above expression (1), in such a manner that the deformation of the tire can be brought into a deformed state close to when the tire is installed on an actual flat road surface.

It is preferable that the moving mechanism include an air cylinder for pressing the surface of the load roll against the tread surface of the rotating tire with the predetermined load fz and an air pressure sensor for measuring an air pressure of the air cylinder. By using the air cylinder for pressing with the predetermined load fz, it is possible to output a large predetermined load fz with a compact structure. Further, by adjusting the air pressure of the air cylinder, it is easy to change the predetermined load fz. In addition, by measuring the air pressure of the air cylinder with the air pressure sensor, the predetermined load fz can be obtained with high accuracy.

It is preferable that the rotating tire be configured to be installed on a tire shaft of a tire uniformity machine. In this way, the tire uniformity machine which is installed in a large number of production sites can perform 100% inspection of tire uniformity of the tire which is mass-produced in actual production sites and the tangential load fx of the tire, which is mass-produced at actual manufacturing sites, can be measured in a short time and in total.

It is preferable that the rotating tire be installed on a tire shaft of a tire balancer machine. This allows the tire balancer machine that is standardly deployed at the manufacturing site to perform 100% inspection of the balance of the tires which are mass-produced at the actual manufacturing site and it is possible to measure the tangential load fx of tires mass-produced in actual manufacturing sites in a short time and in total.

A tire rolling resistance evaluating device of the disclosure includes the above-described tire tangential load measuring device of the disclosure, where a rolling resistance of a tire to be evaluated is configured to be evaluated by comparing a tangential load fx for a predetermined load fz of a reference tire of the same specification or equivalent specifications as the tire to be evaluated measured in advance using the tire tangential load measuring device and a tangential load fx for the predetermined load fz of the tire to be evaluated measured using the tire tangential load measuring device.

In the tire rolling resistance evaluating device, assuming that the above-described tire tangential load measuring device of the disclosure is provided, using the tire tangential load measuring device, by comparing the tangential load fx for the predetermined load fz of the reference tire of the same specification or equivalent specifications as the tire to be evaluated measured in advance and the tangential load fx for the predetermined load fz of the tire to be evaluated measured using the tire tangential load measuring device, the rolling resistance of the tire to be evaluated is to be evaluated. As a result, without using a large-sized device, a tire having abnormal rolling resistance can be sorted out in a short time from all the tires mass-produced at an actual manufacturing site. Here, the reference tire refers to a tire having a known rolling resistance coefficient RRC according to a grade specified by the Japan Automobile Tire Association or a tire manufacturer or the like and having no problem in its value.

A tire rolling resistance evaluating device of the disclosure includes the above-described tire tangential load measuring device of the disclosure, where a rolling resistance of a tire to be evaluated is configured to be evaluated by estimating a rolling resistance coefficient RRC from a tangential load fx for a predetermined load fz of the tire to be evaluated measured using the tire tangential load measuring device based on a correlation expression calculated from a correlation between the known rolling resistance coefficient RRC for a reference tire having the same or equivalent specifications as the tire to be evaluated and the tangential load fx for the predetermined load fz of the reference tire measured in advance using the tire tangential load measuring device. As a result, even in the tire rolling resistance evaluating device, without using a large-sized device, a tire having abnormal rolling resistance can be sorted out in a short time from all the tires mass-produced at an actual manufacturing site.

It is preferable that the tire rolling resistance evaluating device of the disclosure include the above-described tire tangential load measuring device of the disclosure and further include a temperature measurement sensor, where a rolling resistance of the tire to be evaluated is configured to be evaluated by comparing a tangential load fx for the predetermined load fz at a surface temperature of the reference tire measured in advance by the temperature measurement sensor and a tangential load fx for the predetermined load fz at a surface temperature of the tire to be evaluated measured by the temperature measurement sensor. As a result, even for tires which are produced in different steps (that is, different temperatures) at an actual manufacturing site, tires having abnormal rolling resistance can be sorted out in consideration of the temperatures.

## ADVANTAGES OF THE INVENTION

Since the tire tangential load measuring device of the disclosure uses one or two or more load rolls having a smaller diameter than that of the tire, the device for directly measuring the tangential load fx of the tire can be downsized. In addition, by arranging two or more load rolls side by side, it is possible to measure the tangential load fx of the tire by bringing the tire closer to an actual ground contact state (that is, reducing a curvature at the time of deformation of the tire).

In the tire rolling resistance evaluating device of the disclosure, assuming that the above-described tire tangential load measuring device of the disclosure is provided, using the tire tangential load measuring device, by comparing the tangential load fx for the predetermined load fz of the reference tire of the same specification or equivalent specifications as the tire to be evaluated measured in advance and the tangential load fx for the predetermined load fz of the tire to be evaluated measured using the tire tangential load measuring device, the rolling resistance of the tire to be evaluated is to be evaluated. As a result, without using a large-sized device, a tire having abnormal rolling resistance can be sorted out in a short time from all the tires mass-produced at an actual manufacturing site.

## BRIEF DESCRIPTION OF THE DRAWINGS

Fig. 1 is a schematic diagram of a tire tangential load measuring device and a tire rolling resistance evaluating device, which are according to an embodiment of the disclosure, and a tire uniformity machine.

Fig. 2 is a cross-sectional view of the tire tangential load measuring device and the tire rolling resistance evaluating device as viewed from the side.

Fig. 3 is a plan view of the tire tangential load measuring device and the tire rolling resistance evaluating device.

Fig. 4 is a front view of the tire tangential load measuring device and the tire rolling resistance evaluating device.

Fig. 5 is an air circuit diagram for driving an air cylinder.

Fig. 6 is a plan cross-sectional view illustrating a relationship between a load roll and a tire.

Fig. 7 is a side cross-sectional view for explaining a tangential load sensor installed in the tire tangential load measuring device and the tire rolling resistance evaluating device illustrated in Fig. 2.

Fig. 8 is a front view for explaining the tangential load sensor illustrated in Fig. 7.

Fig. 9 is a side cross-sectional view for explaining the tangential load sensor installed at another position of the tire tangential load measuring device and the tire rolling resistance evaluating device illustrated in Fig. 2.

Figs. 10A and 10B are diagrams for explaining the tangential load sensor illustrated in Fig. 9, where Fig. 10A is a plan view and Fig. 10B is an operation principle diagram.

Fig. 11 is an explanatory diagram for explaining a correlation between a known rolling resistance coefficient RRC for a reference tire and a tangential load fx with respect to a predetermined load fz of the reference tire measured in advance.

Fig. 12 is a schematic side view for explaining a temperature measurement sensor installed in the tire tangential load measuring device and the tire rolling resistance evaluating device illustrated in Fig. 1.

Fig. 13 is an explanatory diagram for explaining a relationship between a tire surface temperature and the tangential load fx.

Fig. 14 is a side view in which the tire tangential load measuring device and the tire rolling resistance evaluating device are applied to a tire having a small external dimension.

Fig. 15 is a side view in which the tire tangential load measuring device and the tire rolling resistance evaluating device are applied to a tire having a large external dimension.

Fig. 16 is a side view in which a tire tangential load measuring device and a tire rolling resistance evaluating device according to a modification example are applied to a tire having a small external dimension.

Fig. 17 is a side view in which the tire tangential load measuring device and the tire rolling resistance evaluating device according to the modification example are applied to a tire having a large external dimension.

MODES FOR CARRYING OUT THE INVENTION

Hereinafter, embodiments of the disclosure will be described with reference to the accompanying drawings.

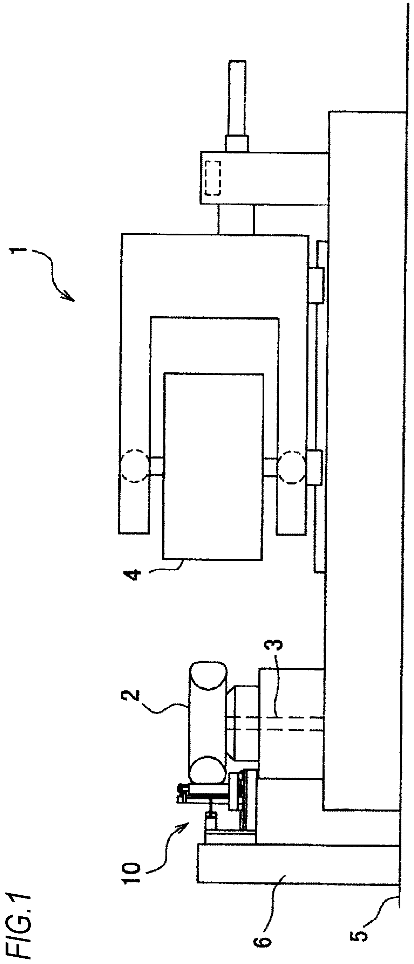

As illustrated in Fig. 1, a tire tangential load measuring device 10 (hereinafter, simply referred to as "tangential load measuring device") of the embodiment is attached to a tire uniformity machine (TUM) 1 which performs a tire uniformity test (JIS D4233) for inspecting the circumferential uniformity of a tire 2. Since the tangential load measuring device 10 is installed separately from the tire uniformity machine 1 instead of being integrated with the tire uniformity machine 1, a load roll 44 (44A, 44B) described below is installed separately from a traveling drum 4 of the tire uniformity machine 1. The tangential load measuring device 10 is installed on an opposite side to the tire uniformity machine 1 with the tire 2 interposed therebetween. The tire 2 has an annular shape and is rotatably supported by a tire shaft 3 extending in a vertical direction. The installation location of the tangential load measuring device 10 is not particularly limited as long as it does not interfere with the tire uniformity machine 1, especially the traveling drum 4 of the tire uniformity machine 1.

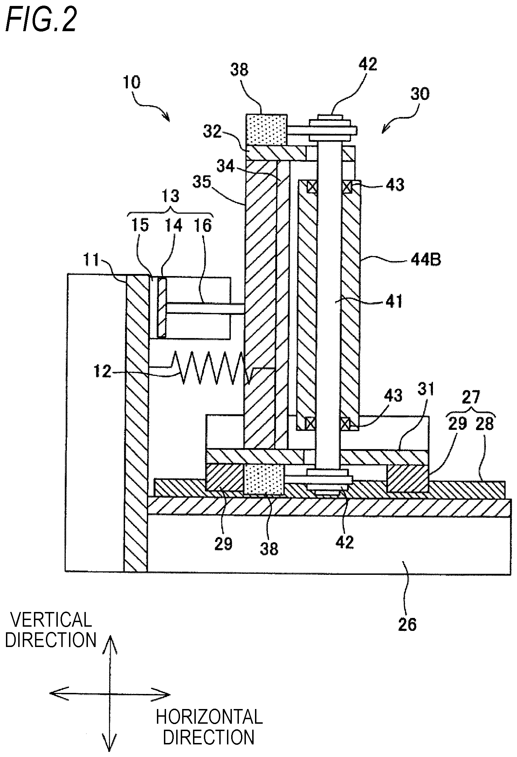

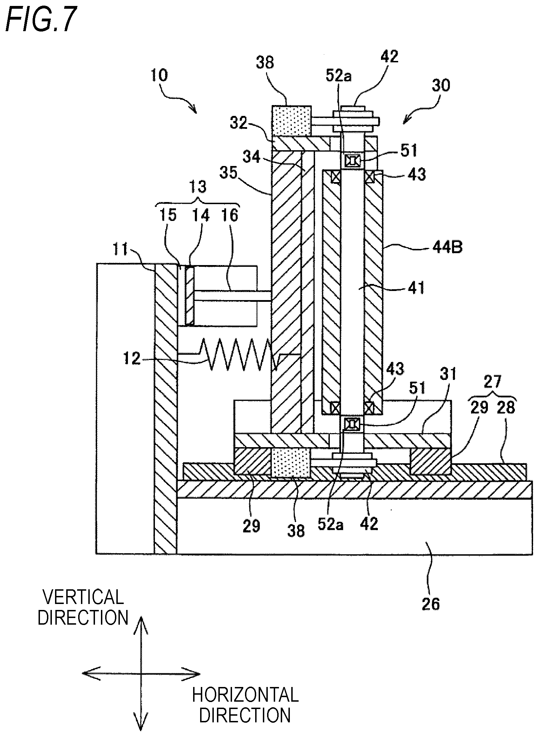

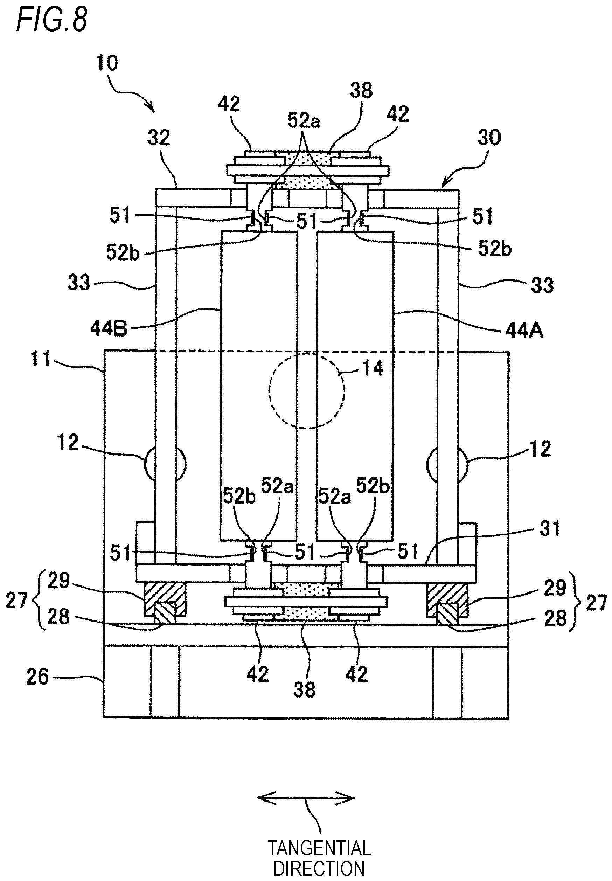

The tangential load measuring device 10 presses a surface of the load roll 44 (see Fig. 2) having a surface (outer peripheral surface) simulating the road surface on which the tire runs on a tread surface of the rotating tire 2 with a predetermined load fz and measures a tangential load fx of the tire 2 in a rotating state (details will be given below using Figs. 7 and 8). The tangential load measuring device 10 is fixed to a fixing member 6 installed on a foundation 5 in the vertical direction.

The tangential load measuring device 10 includes a standing wall 11 fixed to the fixing member 6 in the vertical direction (the up-down direction in Fig. 2), a base frame 26 extending in a horizontal direction (the left-right direction in Fig. 2) orthogonal to the standing wall 11, and a housing 30 which moves horizontally on the base frame 26.

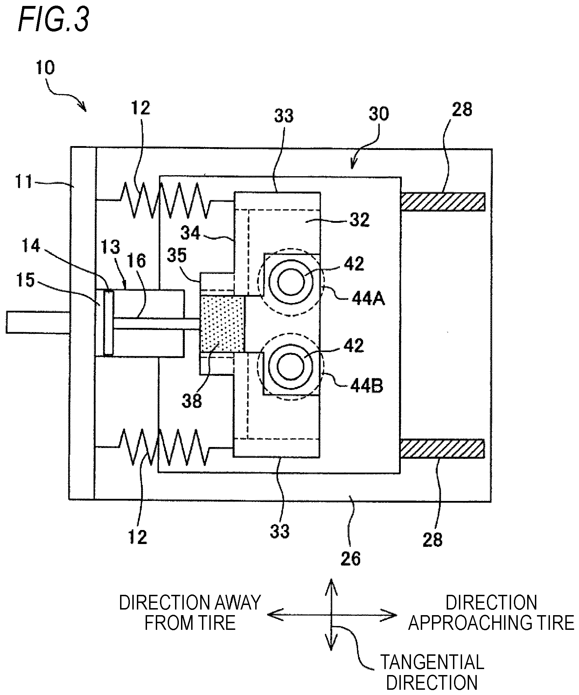

Referring also to Fig. 3, on a housing 30 side of the standing wall 11, a tip end portion is connected to a protruding wall 35 of the housing 30 and an air cylinder 13 which connects the standing wall 11 and the protruding wall 35 of the housing 30 is fixed. The air cylinder 13 is desirably arranged at a position where the load roll 44 can apply a load near the center of the tire 2. The air cylinder 13 is arranged near the center of the load roll 44 in a height direction and the air cylinder 13 forms a moving mechanism.

The moving mechanism (air cylinder 13) is capable of moving the load roll 44 via the housing 30 in a approach direction, which is a direction (the right direction in Fig. 3) approaching the tire 2, and in a separation direction (the left direction in Fig. 3), which is a direction away from the tire 2. The air cylinder 13 has a pressure chamber 15 on the housing 30 side defined by a piston 14, and the pressure of the pressure chamber 15 is switched, so that the housing 30 moves through a piston rod 16. In addition to the air cylinder 13, two springs 12 connecting the standing wall 11 and a rear wall 34 of the housing 30 are arranged on the housing 30 side of the standing wall 11. The two springs 12 urge the housing 30 toward the standing wall 11 without impeding the movement of the load roll 44 by the air cylinder 13.

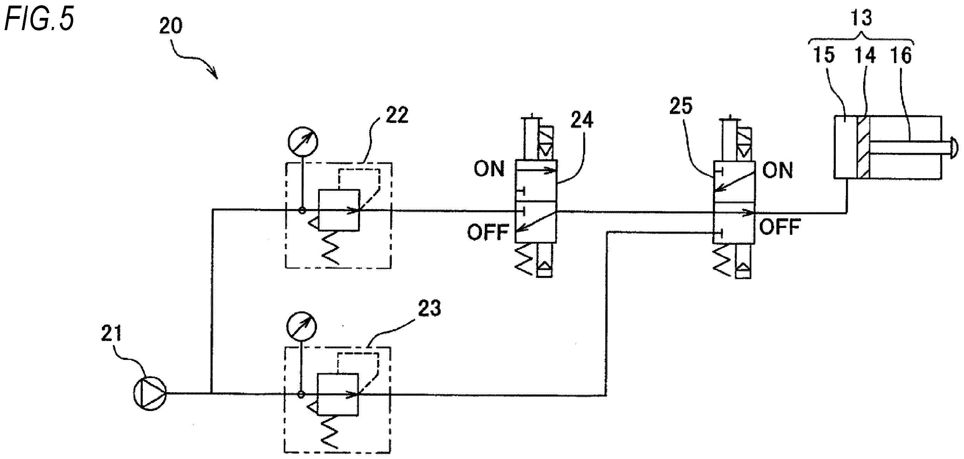

Fig. 5 illustrates an air circuit 20 for driving the air cylinder 13. The pressure in the pressure chamber 15 of the air cylinder 13 is switched by the air circuit 20 connected to a pressure source 21. The air circuit 20 includes a high-pressure-side high-pressure regulator 22 and a low-pressure-side low-pressure regulator 23 connected in parallel between the pressure source 21 and a second solenoid valve 25 connected to the air cylinder 13. A first solenoid valve 24 is connected between the high-pressure regulator 22 and the second solenoid valve 25. By switching the first solenoid valve 24 from off to on, high-pressure or low-pressure air is supplied to the pressure chamber 15 of the air cylinder 13.

By turning off the second solenoid valve 25 in a state where the first solenoid valve 24 is turned on, high-pressure air is supplied to the pressure chamber 15. By turning on the second solenoid valve 25 in a state where the first solenoid valve 24 is turned on, low-pressure air is supplied to the pressure chamber 15. Thus, it is possible to output a large predetermined load fz while having a compact structure. In addition, by adjusting the air pressure of the air cylinder 13, it is easy to change a plurality of types of predetermined load fz. Also, by measuring the air pressure of the air cylinder 13 with an air pressure sensor, the predetermined load fz can be obtained with high accuracy. Further, when the first solenoid valve 24 and the second solenoid valve 25 are turned off from on, the supply of air to the pressure chamber 15 stops and the pressure of the pressure chamber 15 becomes atmospheric pressure. As a result, the entire housing 30 is retracted by the two springs 12 and the load roll 44 is separated from the tire 2.

Returning to Fig. 2, rails 28 of a pair of linear guides 27 extending linearly from a standing wall 11 side end portion of the base frame 26 to a tire 2 side end portion (the right end portion in Fig, 2) of the base frame 26 are fixed to an upper surface of the base frame 26.

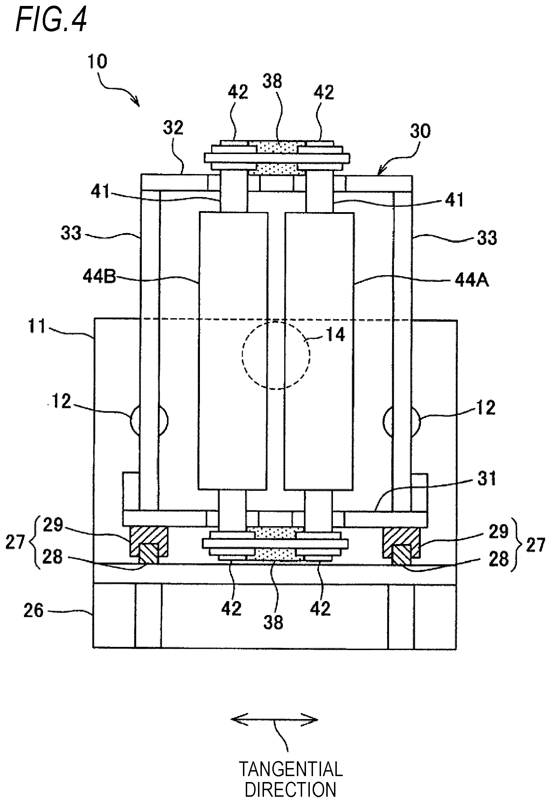

The housing 30 rotatably supports the two load rolls 44 (see Fig. 3) and moves the two load rolls 44 with respect to the tire 2 along the linear guides 27. Referring also to Fig. 4, the housing 30 has a vertically long box shape with an open front (in FIG. 4, the front side) and has a bottom wall 31, a top wall 32, a side wall 33, the rear wall 34 (see Fig. 3), and a protruding wall 35.

A slider 29 which slides along the rail 28 of the linear guide 27 is provided on a lower surface of the bottom wall 31. Since the housing 30 is attached to the base frame 26 via the linear guide 27, the housing 30, that is, the two load rolls 44 can be prevented from tilting.

On the lower surface of the bottom wall 31 and the upper surface of the upper wall 32, load cells 38 which are load sensors for detecting the predetermined load fz applied to the tire 2 in a state where the surface of the load roll 44 is in contact with the tire 2 are respectively provided. Upper roll fixing members 42 for fixing the upper ends of two roll shafts 41 are attached to the upper load cell 38 and lower roll fixing members 42 for fixing the lower ends of the two roll shafts 41 are attached to the lower load cell 38. Each of the two roll shafts 41 rotatably supports the load roll 44 via a bearing 43. With those configurations, when the load roll 44 is pressed against the tread surface of the tire 2, a load is transmitted to the load cell 38 via the roll shaft 41 and the roll fixing member 42 and the predetermined load fz applied to the tire 2 is measured by the load cell 38. Since all loads acting on the two load rolls 44 act on the load cell 38, the loads can be measured accurately. However, since the predetermined load fz applied to the tire 2 can be accurately applied by the air cylinder 13, the load cell 38 serving as the load sensor is not essential in the disclosure.

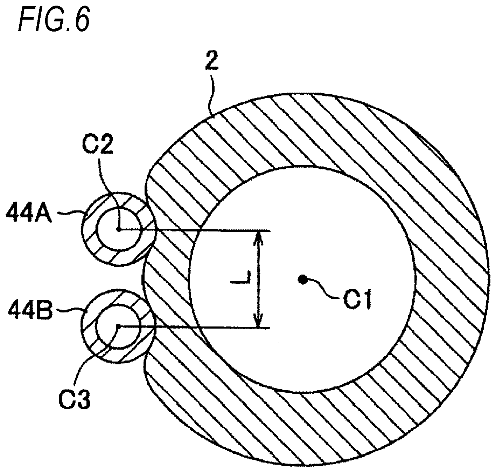

The load roll 44 is a cylindrical member having an axis extending in the vertical direction and the outer peripheral surface of the load roll 44 is used as a simulated road surface for tire testing. Fig. 6 is a plan cross-sectional view illustrating a relationship between the load rolls 44A and 44B and the tire 2 in a state where the two load rolls 44A and 44B are in contact with the tire 2. The two load rolls 44A and 44B are arranged side by side and the outer diameter of each of the load rolls 44A and 44B is smaller than the outer diameter of tire 2. The minimum outer diameter of the load rolls 44A and 44B is determined by the strength of the load rolls 44A and 44B with respect to the predetermined load fz. In the embodiment, the ratio of the outer diameter of the tire 2 to the outer diameter of the load roll 44A or 44B is set to 5. The outer dimensions of the two load rolls 44A and 44B are the same (the same shape) and specific numerical values of the outer diameters of the load rolls 44A and 44B are not particularly limited.

In Fig. 6, C1 is a rotation center of the tire 2, and C2 and C3 are the rotation centers of the load rolls 44A and 44B. A distance L between the rotation centers of the adjacent load rolls 44A and 44B of the load rolls 44 is set in a range represented by the following expression (1). In the embodiment, the two load rolls 44A and 44B are described as an example, but the following expression (1) is also valid in a case of two or more load rolls 44.

$$0.5 \times fz / (B \times P) \leq L \leq 1.5 \times fz / (B \times P) \quad (1)$$

Here, fz is a predetermined load (kN), B is the axial width (m) of the tire 2, and P is a standard tire pressure (kPa).

In general, the size of the contact surface between the tire 2 and the road surface is said to be the size of a postcard (100 mm × 148 mm), and a contact length A is about 100 mm. Assuming that the weight of a car is 1.5 tons, a single tire exerts a force of 375 kgf (3675N). When the internal pressure of the tire 2 is set to 0.25 MPa and a width B of the tire 2 is set to 0.148 m, the contact length A becomes 0.1 m. Therefore, by making the distance L between the rotation centers of the adjacent load rolls 44 (for example, the load rolls 44A and 44B) of two or more load rolls 44 equal to the contact length A, the deformation of the tire 2 becomes a deformation state close to when it is installed on a flat road surface.

By making the distance L between the rotation centers of the adjacent load rolls 44 of the two or more load rolls 44 set in the range represented by the above expression (1), the deformation of the tire 2 can be brought into a deformed state close to when it is installed on an actual flat road surface. In other words, when actually measuring the tires 2 of multiple sizes, the width B of the tire 2 is not always equal to the length of the ground contact surface (the width of the ground contact surface is smaller than the actual width B of the tire 2). However, by making the distance L between the rotation centers of the adjacent load rolls 44 of the two or more load rolls 44 set in the range represented by the above expression (1), the deformation of the tire 2 can be brought into a deformed state close to when it is installed on an actual flat road surface.

Fig. 7 is a side cross-sectional view for explaining a tangential load sensor installed in the tangential load measuring device 10 illustrated in Fig 2 and Fig. 8 is a front view for explaining the tangential load sensor illustrated in Fig. 7.

In Fig. 7, a strain gauge 51 is used as the tangential load sensor for measuring the tangential load fx of the rotating tire 2 by pressing the surface of the load roll 44B against the tread surface of the rotating tire 2 with a predetermined load fz. The strain gauges 51 are configured to be attached to notches 52a provided at both upper and lower ends of the roll shaft 41 so as to be orthogonal to the rear wall 34 of the housing 30.

Also, in Fig. 8, a notch 52b is provided at each of the upper and lower ends of the two roll shafts 41 so as to oppose the notch 52a and the strain gauge 51 is also attached to the notch 52b.

As described above, the tangential load measuring device 10 of the disclosure includes two or more load rolls 44 which have surfaces simulating the road surface on which the tire 2 runs, have a smaller diameter than that of the tire 2, and are arranged side by side, the air cylinder 13 as a moving mechanism capable of pressing the surfaces of the two or more load rolls 44 against the tread surface of the rotating tire 2 with a predetermined load fz, and the strain gauge 51 as a tangential load sensor for measuring the tangential load fx of the rotating tire 2 in a state where the surfaces of the two or more load rolls 44 are pressed against the tread surface of the tire 2 with the predetermined load fz.

Therefore, in the tangential load measuring device 10 of the disclosure, since the load rolls 44A and 44B having a smaller diameter than that of the tire 2 are used, the device for directly measuring the tangential load fx of the tire 2 can be downsized. In addition, by arranging two or more load rolls 44 side by side, the tire 2 approaches the actual ground contact state (that is, the curvature of the tire 2 when deformed is reduced) and the tangential load fx of the tire 2 can be measured. Further, in the embodiment, the rotating tire 2 is installed on the tire shaft 3 of the tire uniformity machine 1. In this way, the tire uniformity machine 1 which is installed in a large number of production sites can perform 100% inspection of tire uniformity of the tire 2 which is mass-produced in actual production sites and the tangential load fx of the tire 2, which is mass-produced at actual manufacturing sites, can be measured in a short time and in total. Also, since the load roll 44 is especially installed separately from the traveling drum 4 of the tire uniformity machine 1 among the tire testing machines, the tangential load measuring device 10 can be installed without modifying the existing tire uniformity machine 1. The measurement of the tangential load of the tire and the evaluation test of the rolling resistance of the tire described below are performed after the traveling drum 4 is retracted from the tire 2 after the tire uniformity test using the traveling drum 4. Further, to the measured tangential load fx, in addition to the rolling resistance of the tire 2, a load generated by the rotational resistance of the bearing of the load roll 44 is added. As a method of removing the load generated by this rotational resistance, for example, it is desirable that, in addition to the tangential load fx at a predetermined load fz such as 4000 N, a tangential load fx’ when a small load fz of about 100 N, for example, is applied is measured and a difference value (fx - fx’) between the two is used. This method is also recommended by JIS.

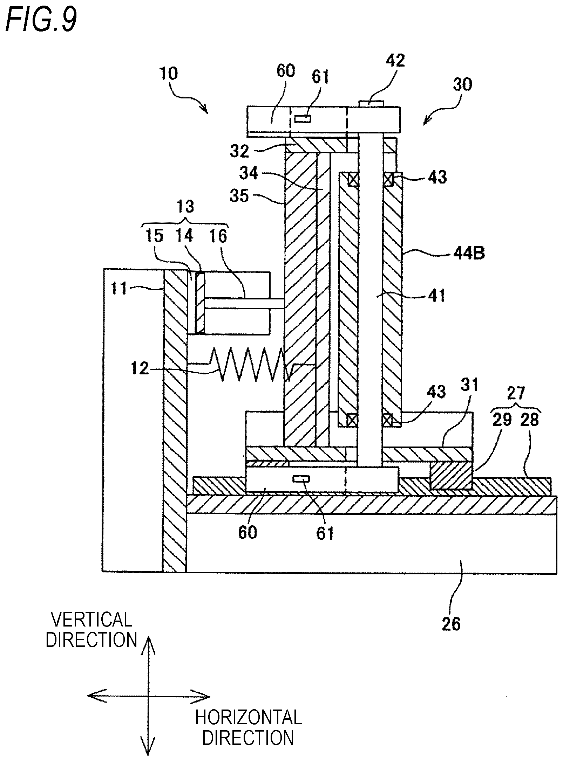

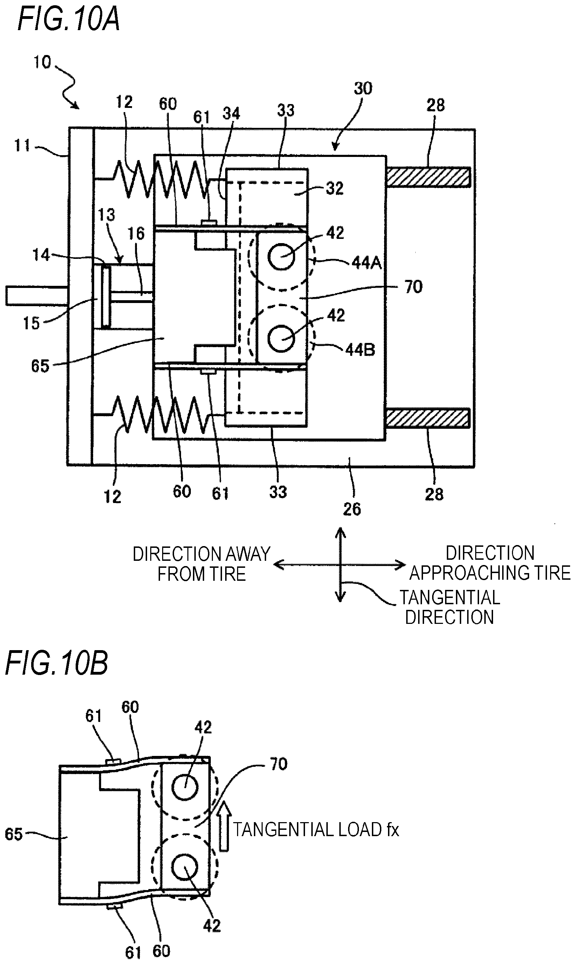

In the embodiment, as a tangential load sensor installed in the tangential load measuring device 10, a case where the strain gauges 51 attached to the notches 52a and 52b provided at the upper and lower ends of the roll shaft 41 is described. However, the disclosure is not limited to this and the tangential load sensor can be installed at another position as illustrated in Figs. 9 and 10.

Fig. 9 is a side cross-sectional view for explaining the tangential load sensor installed at another position of the tire tangential load measuring device 10 illustrated in Fig. 2 and Figs. 10A and 10B are diagrams for explaining the tangential load sensor illustrated in Fig. 9, where Fig. 10A is a plan view and Fig. 10B is an operation principle diagram.

In Figs. 9 and 10A, the tangential load sensor is the strain gauges 61 which are respectively attached to two leaf springs 60 that are supported so as to be orthogonal to the tangential direction of the tire 2 in a state where a connecting member 70 connecting the upper roll fixing members 42 and 42 for fixing the upper ends of the two roll shafts 41 and the fixing member 65 fixed to the top wall 32 of the housing 30 are orthogonal to the rear wall 34 of the housing 30. When the tangential load fx acts on the plane of the drawing as illustrated in Fig. 10B, the two leaf springs 60 bend upwardly on the plane of the drawing. Therefore, by configuring the tangential load sensor as described above, the deflection according to the magnitude of the tangential load fx can be measured by the strain gauge 61.

Although not described in detail, the tangential load fx can be measured by the load cell 38 described above.

In the embodiment, a case where the rotating tire 2 is installed on the tire shaft 3 of the tire uniformity machine 1 is described. However, the configuration is not limited to this and a configuration in which the rotating tire 2 is installed on a tire shaft (not illustrated) of a tire balancer machine is also possible. This allows the tire balancer machine that is standardly deployed at the manufacturing site to perform 100% inspection of the balance of the tires which are mass-produced at the actual manufacturing site and it is possible to measure the tangential load fx of tires mass-produced in actual manufacturing sites in a short time and in total.

Further, in the embodiment, a case where two load rolls 44 are used is mainly described. However, the disclosure is not necessarily limited to this. For example, it is possible to use a plurality of (two or more) load rolls, such as three load rolls 44, and conversely, it is also possible to use one load roll 44. Further, as long as the outer diameter of the load roll 44 is smaller than the outer diameter of the tire 2, the specific outer diameter of the load roll 44 is not particularly limited.

In the present embodiment, the outer dimensions of the two load rolls 44 are the same, but a plurality of load rolls having different outer dimensions may be employed.

Next, the tire rolling resistance evaluating device of the disclosure will be described below.

In the tire rolling resistance evaluating device of the disclosure, assuming that the above-described tire tangential load measuring device (the tangential load measuring device 10 described in Figs. 1 to 10B) of the disclosure is provided, using the tire tangential load measuring device, by comparing the tangential load fx for the predetermined load fz of the reference tire of the same specification or equivalent specifications as the tire to be evaluated measured in advance and the tangential load fx for the predetermined load fz of the tire to be evaluated measured using the tire tangential load measuring device, the rolling resistance of the tire to be evaluated is to be evaluated. Here, the reference tire refers to a tire having a known rolling resistance coefficient RRC according to a grade specified by the Japan Automobile Tire Association or a tire manufacturer and having no problem in its value.

Therefore, it is possible to sort out tires having abnormal rolling resistance in a short time from all the tires mass-produced at an actual manufacturing site without using a large-sized device.

Further, as the tire rolling resistance evaluating device of the disclosure, a tire rolling resistance evaluating device (hereinafter, referred to as "second tire rolling resistance evaluating device") having another configuration may be used. Hereinafter, the second tire rolling resistance evaluating device will be described.

In the second tire rolling resistance evaluating device, assuming that the above-described tire tangential load measuring device (the tangential load measuring device 10 described in Figs. 1 to 10B) of the disclosure is provided, based on a correlation expression calculated from the correlation between a known rolling resistance coefficient RRC for a reference tire having the same or equivalent specifications as the tire to be evaluated and the tangential load fx for the predetermined load fz of the reference tire measured in advance using the tire tangential load measuring device, by estimating the rolling resistance coefficient RRC from the tangential load fx for the predetermined load fz of the tire to be evaluated measured using the tire tangential load measuring device, the rolling resistance of the tire to be evaluated is to be evaluated.

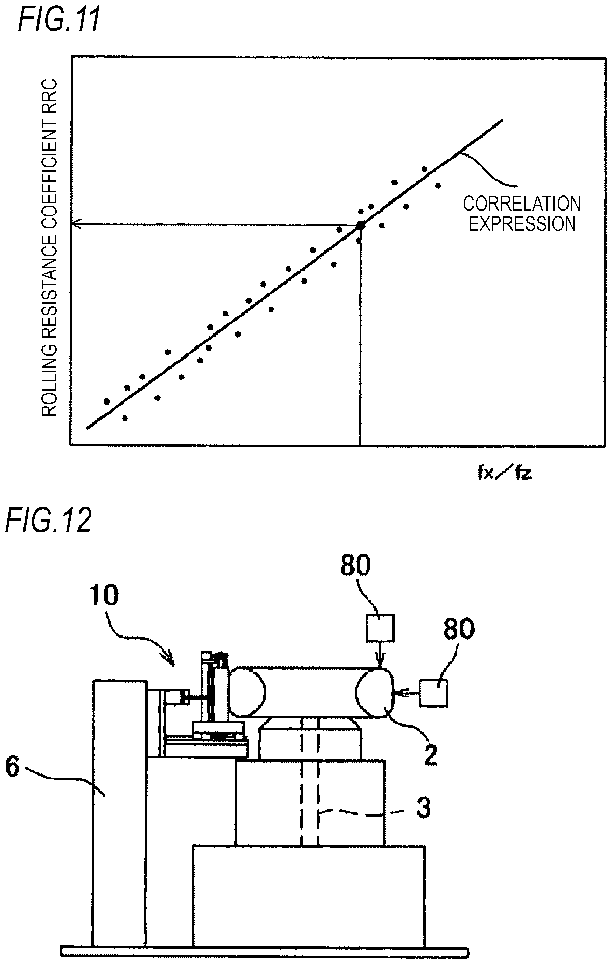

Fig. 11 is an explanatory diagram for explaining a correlation between a known rolling resistance coefficient RRC of a reference tire and a tangential load fx for a predetermined load fz of the reference tire measured in advance. As illustrated in Fig. 11, a correlation expression between a known rolling resistance coefficient RRC for the reference tire and a previously measured tangential load fx for a predetermined load fz of the reference tire is determined. By using this correlation expression, the rolling resistance coefficient RRC is estimated from the tangential load fx for a predetermined load fz of the tire to be evaluated measured using the tire tangential load measuring device of the present disclosure and the rolling resistance of the tire to be evaluated is evaluated based on the estimated rolling resistance coefficient RRC.

Therefore, even in the second tire rolling resistance evaluating device, it is possible to sort out tires with abnormal rolling resistance in a short time from all the tires which are mass-produced at actual manufacturing sites without using large-scale equipment.

Further, as the tire rolling resistance evaluating device of the disclosure, a tire rolling resistance evaluating device (hereinafter, referred to as "third rolling resistance evaluating device") having still another configuration may be used. Hereinafter, the third tire rolling resistance evaluating device will be described with reference to Fig. 12.

In Fig. 12, in the third tire rolling resistance evaluating device, assuming that the above-described tire tangential load measuring device (the tangential load measuring device 10 described in Figs. 1 to 10B) of the disclosure and a temperature measurement sensor 80 are further provided, by comparing the tangential load fx for a predetermined load fz at the surface temperature of the reference tire measured in advance by the temperature measurement sensor 80 and the tangential load fx for the predetermined load fz at the surface temperature of the tire to be evaluated measured by the temperature measurement sensor 80, the rolling resistance of the tire to be evaluated is to be evaluated.

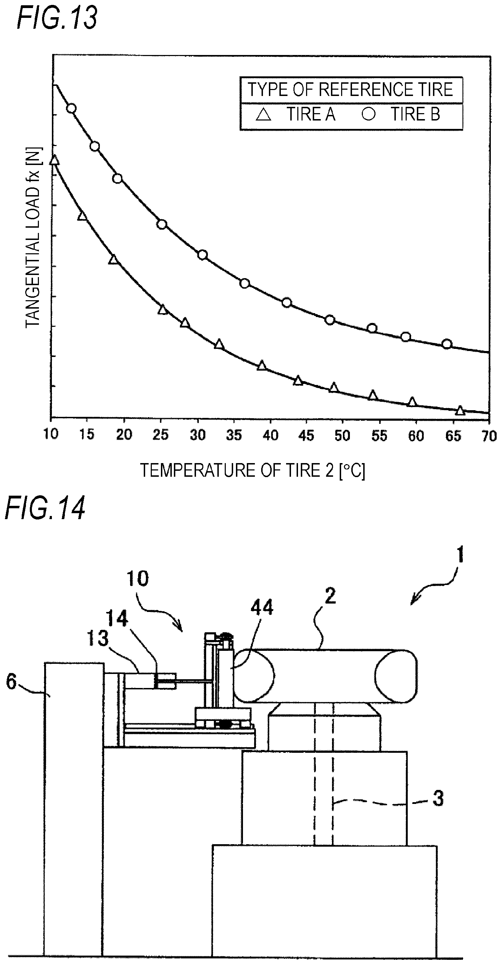

Fig. 13 is an explanatory diagram for explaining a relationship between a plurality of surface temperatures of a tire and a tangential load fx in a tire A (indicated by a reference symbol Δ) and a tire B (indicated by a reference symbol O) as reference tires.

Therefore, the tangential load fx for the predetermined load fz at the surface temperature of the tire to be evaluated measured by the temperature measurement sensor 80 is compared with approximate curves of multiple surface temperatures and tangential loads fx of the tire illustrated in Fig. 13, in such a manner that the rolling resistance of the tire to be evaluated is evaluated (that is, a tire having an abnormal rolling resistance can be sorted out). As a result, even for tires which are produced in different steps (that is, different temperatures) at an actual manufacturing site, tires having abnormal rolling resistance can be sorted out in consideration of the temperatures.

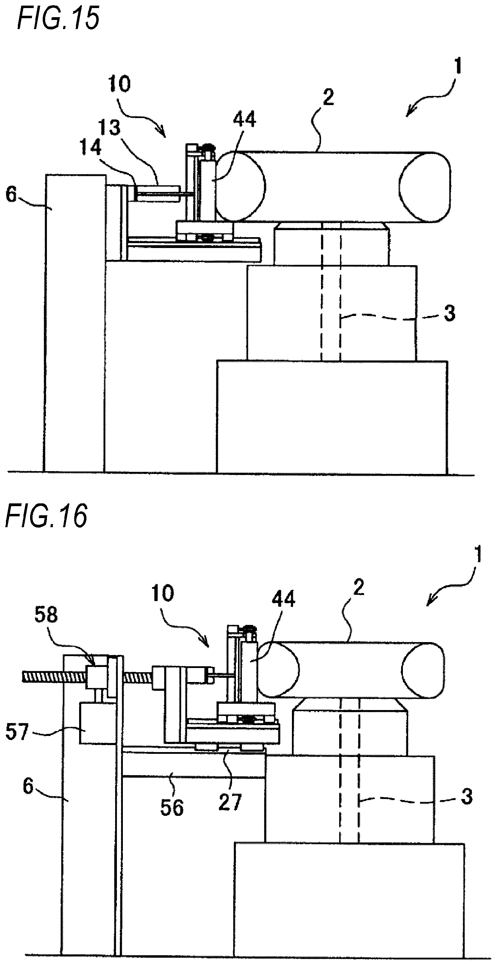

The tire tangential load measuring device (tangential load measuring device 10) according to the disclosure and the tire rolling resistance evaluating device using the tangential load measuring device 10 according to the disclosure can be applied to various tires 2 having different outer diameters. Fig. 14 illustrates a side view in which the tangential load measuring device 10 and the tire rolling resistance evaluating device using the tangential load measuring device 10 are applied to the tire 2 having a smaller outer dimension than that of the tire 2 used in the embodiment. In this case, the piston 14 of the air cylinder 13 is moved to the tire 2 side to extend the stroke of the air cylinder 13 and the load roll 44 is pressed against the tire 2. Fig. 15 illustrates a side view in which the tangential load measuring device 10 and the tire rolling resistance evaluating device using the tangential load measuring device 10 are applied to the tire 2 having a larger outer dimension than that of the tire 2 used in Fig 14. In this case, the piston 14 of the air cylinder 13 is moved to the fixing member 6 side to shorten the stroke of the air cylinder 13 and the load roll 44 is pressed against the tire 2. Here, the tire in a case of "load roll having a smaller diameter than that of the tire" in the disclosure means a tire having the smallest diameter among the tires which can be handled by the device. That is, in cases of Figs. 4 and 5, it means a tire to be measured in a state where the stroke of the air cylinder 13 is maximized. Thus, the diameter of the tire to be compared with the diameter of the load roll is determined by the relationship between the position of the tire shaft 3 in the device and the position of the load roll 44 as close as possible to the tire to be measured. Further, "the expression (1) is satisfied" means that the expression (1) is satisfied in any of the tires which can be handled by the device.

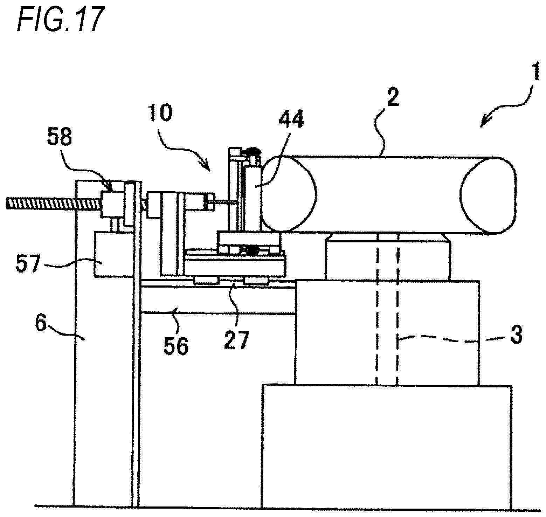

In the embodiment, the air cylinder 13 is used to press the load roll 44 against the tire 2 with a predetermined load fz, but the disclosure is not limited to this. For example, the same effect can be obtained by a combination of a hydraulic cylinder and a hydraulic circuit, or a combination of a ball screw and a servomotor. The load fz can be calculated from the torque value even with the servomotor. Further, the tire tangential load measuring device 10 according to a modification example using a ball screw and a servomotor and the tire rolling resistance evaluating device using the tangential load measuring device 10 will be described with reference to Figs. 16 and 17 described below.

As illustrated in Figs. 16 and 17, the tangential load measuring device 10 and the tire rolling resistance evaluating device using the tangential load measuring device 10 are installed on a base 56 fixed to the fixing member 6 via the linear guide 27. In this case, the tangential load measuring device 10 and the tire rolling resistance evaluating device using the tangential load measuring device 10 are moved with respect to the tire 2 by a ball screw 58 driven by a servomotor 57 fixed to the fixing member 6. Thereby, the tangential load measuring device 10 and the tire rolling resistance evaluating device using the tangential load measuring device 10 can be applied to various tires 2 having different external dimensions.

In the tangential load measuring device 10 of the embodiment and the tire rolling resistance evaluating device using the tangential load measuring device 10, by installing the load roll 44 separately from each tire testing machine which tests the properties or performance of the tire including a tire uniformity machine, a tire balancer machine, and a running test machine, without modifying existing test equipment or with simple modification of existing test equipment, the tangential load measuring device 10 and the tire rolling resistance evaluating device using the tangential load measuring device 10 can be easily installed in various test machines of different manufacturers and types with the same specifications.

In the embodiment, although mainly described an example configured so that the rolling resistance of the tire to be evaluated is evaluated such that, as a tire rolling resistance evaluating device, the tire tangential load measuring device 10 which employs the two load rolls 44 smaller in diameter than that of the tire 2 and arranged side by side is provided and a tangential load fx for a predetermined load fz of a reference tire of the same specification or equivalent specification as a tire to be evaluated measured in advance using the tangential load measuring device 10 and the tangential load fx for the predetermined load fz of the tire to be evaluated measured using the tire tangential load measuring device 10 are compared, it is not necessarily limited to this.

It is also possible to be configured so that the rolling resistance of the tire to be evaluated is evaluated such that, for example, as a tire rolling resistance evaluating device, the tire tangential load measuring device 10 which employs three or more (that is, a plurality (two or more)) load rolls 44 smaller in diameter than that of the tire 2 and arranged side by side is provided and a tangential load fx for a predetermined load fz of a reference tire of the same specification or equivalent specification as a tire to be evaluated measured in advance using this tangential load measuring device 10 and the tangential load fx for the predetermined load fz of the tire to be evaluated measured using the tire tangential load measuring device 10 are compared. In addition, it is also possible to adopt a configuration in which the tire tangential load measuring device 10 which employs three or more (that is, a plurality (two or more)) load rolls 44 smaller in diameter than that of the tire 2 and arranged side by side and the rolling resistance of the tire to be evaluated described with reference to Figs. 11 to 13 is evaluated.

In addition, it is also possible to configure so that the rolling resistance of the tire to be evaluated is evaluated such that, as a tire rolling resistance evaluating device, the tire tangential load measuring device 10 employing one load roll 44 with a smaller diameter than that of the tire 2 is provided and a tangential load fx for a predetermined load fz of a reference tire of the same specification or equivalent specification as a tire to be evaluated measured in advance using this tangential load measuring device 10 and the tangential load fx for the predetermined load fz of the tire to be evaluated measured using the tire tangential load measuring device 10 are compared. In such a configuration, the load roll 44 is one. Therefore, without using large equipment, it is possible not only to sort out tires having abnormal rolling resistance in a short time for all the tires that are mass-produced at the actual manufacturing site, but also to make the apparatus more inexpensive. In addition, it is also possible to adopt a configuration in which the tire tangential load measuring device 10 which employs one load roll 44 with a smaller diameter than that of the tire 2 is provided and the rolling resistance of the tire to be evaluated described with reference to Figs. 11 to 13 is evaluated.

As described above, the embodiments of the disclosure have been described with reference to the drawings. However, it should be considered that the specific configuration is not limited to those embodiments. The scope of the disclosure is defined not only by the above-described embodiment but also by the scope of the claims, and further includes meanings equivalent to the scope of the claims and all modifications within the scope.

This application is based on a Japanese patent application filed on November 7, 2017 (Japanese Patent Application No. 2017-214457), the contents of which are incorporated herein by reference.

DESCRIPTION OF REFERENCE NUMERALS AND SIGNS

| | |
|---|---|
| 1: | tire uniformity machine |
| 2: | tire |
| 3: | tire shaft |
| 10: | tire tangential load measuring device |
| 12: | spring (moving mechanism) |
| 13: | air cylinder (moving mechanism) |
| 44, 44A, 44B: | load roll |
| 51: | strain gauge (tangential load sensor) |

## Claims

**1.** A tire tangential load measuring device, comprising:

one load roll which has a surface simulating a road surface on which a tire runs and has a smaller diameter than that of the tire;
a moving mechanism capable of pressing the surface of the one load roll against a tread surface of the rotating tire with a predetermined load fz; and
a tangential load sensor for measuring a tangential load fx of the tire in a rotating state while the surface of the one load roll is pressed against the tread surface of the tire with the predetermined load fz.

**2.** A tire tangential load measuring device, comprising:

two or more load rolls which have surfaces simulating a road surface on which a tire runs, have smaller diameters than that of the tire, and are arranged side by side;
a moving mechanism capable of pressing the surfaces of the two or more load rolls against a tread surface of the rotating tire with a predetermined load fz; and
a tangential load sensor for measuring a tangential load fx of the tire in a rotating state while the surfaces of the two or more load rolls are pressed against the tread surface of the tire with the predetermined load fz.

**3.** The tire tangential load measuring device according to claim 2, wherein
a distance L between rotation centers of the adjacent load rolls of the two or more load rolls is set in a range represented by the following expression (1).

$$0.5 \times \mathrm{fx} / (\mathrm{B} \times \mathrm{P}) \leq \mathrm{L} \leq 1.5 \times \mathrm{fz} / (\mathrm{B} \times \mathrm{P}) \quad (1)$$

Here, fz is a predetermined load (kN), B is a width (m) of the tire, and P is a standard tire pressure (kPa).

**4.** The tire tangential load measuring device according to claim 1, wherein
the moving mechanism includes:

an air cylinder for pressing the surface of the load roll against the tread surface of the rotating tire with the predetermined load fz; and
an air pressure sensor for measuring an air pressure of the air cylinder.

**5.** The tire tangential load measuring device according to claim 2, wherein
the moving mechanism includes:

an air cylinder for pressing the surfaces of the load rolls against the tread surface of the rotating tire with the predetermined load fz; and
an air pressure sensor for measuring an air pressure of the air cylinder.

**6.** The tire tangential load measuring device according to claim 1, wherein
the rotating tire is configured to be installed on a tire shaft of a tire uniformity machine.

**7.** The tire tangential load measuring device according to claim 2, wherein
the rotating tire is configured to be installed on a tire shaft of a tire uniformity machine.

**8.** The tire tangential load measuring device according to claim 1, wherein
the rotating tire is configured to be installed on a tire shaft of a tire balancer machine.

**9.** The tire tangential load measuring device according to claim 2, wherein
the rotating tire is configured to be installed on a tire shaft of a tire balancer machine.

**10.** A tire rolling resistance evaluating device, comprising:

the tire tangential load measuring device according to claim 1 or 2, wherein
a rolling resistance of a tire to be evaluated is configured to be evaluated by comparing a tangential load fx for a predetermined load fz of a reference tire of the same specification or equivalent specifications as the tire to be evaluated measured in advance using the tire tangential load measuring device and a tangential load fx for the predetermined load fz of the tire to be evaluated measured using the tire tangential load measuring device.

**11.** A tire rolling resistance evaluating device, comprising:

the tire tangential load measuring device according to any one of claims 1 to 9, wherein
a rolling resistance of a tire to be evaluated is configured to be evaluated by estimating a rolling resistance coefficient RRC from a tangential load fx for a predetermined load fz of the tire to be evaluated measured using the tire tangential load measuring device based on a correlation expression calculated from a correlation between the known rolling resistance coefficient RRC for a reference tire having the same or equivalent specifications as the tire to be evaluated and the tangential load fx for the predetermined load fz of the reference tire measured in advance using the tire tangential load measuring device.

**12.** The tire rolling resistance evaluating device according to claim 10, further comprising:

a temperature measurement sensor, wherein
a rolling resistance of the tire to be evaluated is configured to be evaluated by comparing a tangential load fx for the predetermined load fz at a surface temperature of the reference tire measured in advance by the temperature measurement sensor and a tangential load fx for the predetermined load fz at a surface temperature of the tire to be evaluated measured by the temperature measurement sensor.

FIG.1
1
2
3
4
5
6
10

*FIG.2*

38
42
10
30
32
34
43
35
13
15 14 16
44B
11
41
12
43
31
27
29 28
29
38
42
26
VERTICAL DIRECTION
HORIZONTAL DIRECTION

FIG.3

10
12
33
30
28
11
32
34
14
13
16
35
42
15
44A
42
44B
38
12
33
28
26
12
33
28
DIRECTION AWAY FROM TIRE
DIRECTION APPROACHING TIRE
TANGENTIAL DIRECTION

FIG.4

10
42
38
42
32
30
41
41
33
33
44B
44A
11
14
12
12
31
27
29
28
29
27
28
26
42
38
42

TANGENTIAL
DIRECTION

13
15
14
16
ON
OFF
25
24
ON
OFF
22
23
20
21

FIG.5

*FIG.6*

2
C2
44A
L
C1
44B
C3

*FIG.7*

10
38
52a
42
30
32
51
34
43
35
13
15 14 16
44B
11
41
12
43
31
27
51
29 28
29
38
52a
42
26
VERTICAL DIRECTION
HORIZONTAL DIRECTION

*FIG.8*

TANGENTIAL
DIRECTION

FIG.9
10
60
61
42
30
32
34
35
43
13
15 14 16
44B
11
41
12
43
31
27
29 28
60
61
26
VERTICAL DIRECTION
HORIZONTAL DIRECTION

FIG.10A

10
11
12
60
61
34
33
30
28
32
13
16
14
42
44A
70
15
42
44B
65
12
60
61
33
26
28
DIRECTION AWAY FROM TIRE
DIRECTION APPROACHING TIRE
TANGENTIAL DIRECTION

FIG.10B

61
60
42
70
65
TANGENTIAL LOAD fx
42
61
60

FIG.11

ROLLING RESISTANCE COEFFICIENT RRC
CORRELATION EXPRESSION
fx／fz

FIG.12

80
10
80
6
2
3

FIG.13

TYPE OF REFERENCE TIRE
△ TIRE A ○ TIRE B
TANGENTIAL LOAD fx [N]
10 15 20 25 30 35 40 45 50 55 60 65 70
TEMPERATURE OF TIRE 2 [°C]

FIG.14

1
10
2
44
14
13
6
3

FIG.15

1
2
10
13
14
44
6
3

FIG.16

1
2
10
44
58
57
6
56
27
3

FIG.17

1
2
10
44
58
57
6
56
27
3

**INTERNATIONAL SEARCH REPORT**

International application No. PCT/JP2018/037823

A. CLASSIFICATION OF SUBJECT MATTER
Int.Cl. G01M17/02(2006.01)i, B60C19/00(2006.01)i, G01L5/00(2006.01)i, G01N19/02(2006.01)i

According to International Patent Classification (IPC) or to both national classification and IPC

B. FIELDS SEARCHED

Minimum documentation searched (classification system followed by classification symbols)
Int.Cl. G01M1/00-1/38; 17/02, B60C19/00, G01N19/02, G01L5/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | EP 2793013 A1 (SNAP-ON EQUIPMENT SRL A UNICO SOCIO) 22 October 2014, paragraphs [0001], [0022]-[0024], [0034]-[0051], [0060]-[0064], fig. 1-4 & CN 104111176 A | 1-2, 4-12<br>3 |
| Y<br>A | JP 2015-232545 A (KOBE STEEL, LTD.) 24 December 2015, paragraphs [0021], [0035]-[0036], [0043]-[0045] & US 2017/0153163 A1, paragraphs [0036], [0049]-[0050], [0062]-[0069] & WO 2015/174323 A1 & EP 3144660 A1 & TW 201612498 A & KR 10-2016-0147875 A & CN 106461509 A | 1-2, 4-12<br>3 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 November 2018 (27.11.2018) | 11 December 2018 (11.12.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/037823

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2011-164011 A (ONO SOKKI CO., LTD.) 25 August 2011, paragraph [0010], fig. 2 (Family: none) | 4-5, 10-12<br>1-3, 6-9 |
| Y<br>A | Microfilm of the specification and drawings annexed to the request of Japanese Utility Model Application No. 080071/1971 (Laid-open No. 36893/1973) (HITACHI, LTD.) 04 May 1973, specification, page 3, line 11 to page 5, line 14, fig. 1, 3 (Family: none) | 4-5, 10-12<br>1-3, 6-9 |
| A | JP 2001-341507 A (CHUO PRECISION INDUSTRIAL CO., LTD.) 11 December 2001, paragraph [0043], fig. 8 & US 2002/0011103 A1, paragraph [0076], fig. 8 & EP 1138527 A2 & DE 60108435 T2 & AU 5345100 A & CA 2342392 A1 & TW 480226 B & AU 766962 B2 & ID 29708 A | 1-12 |
| A | JP 07-260638 A (BRIDGESTONE CORPORATION) 13 October 1995, paragraphs [0010]-[0030], fig. 1-7 & US 5448910 A, column 2, line 65 to column 6, line 6, fig. 1-7 & EP 671621 A2 & DE 69502042 T2 | 1-12 |
| A | Microfilm of the specification and drawings annexed to the request of Japanese Utility Model Application No. 086774/1976 (Laid-open No. 005901/1978) (HITACHI, LTD.) 19 January 1978, specification, page 1, line 10 to page 3, line 11, fig. 1-2 (Family: none) | 1-12 |
| A | US 4829815 A (KUZAS, S. George) 16 May 1989, column 3, line 60 to column 4, line 35, fig. 1-3 (Family: none) | 1-12 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003004598 A
- JP 2017214457 A